# EUROPÄISCHE PATENTSCHRIFT

(11) **EP 0 910 883 B1**
(45) Veröffentlichungstag und Bekanntmachung des Hinweises auf die Patenterteilung: **27.12.2006**
(21) Anmeldenummer: 98924240.9
(22) Anmeldetag: 29.04.1998
(51) Int. Cl.: H02H 7/085

(54) **VERFAHREN ZUR STEUERUNG DES SCHLIESSVORGANGS VON SCHLIESSVORRICHTUNGEN MIT MINDESTENS EINEM ELEKTROMOTORISCH BEWEGTEN TEIL**
METHOD FOR CONTROLLING THE CLOSING PROCESS OF CLOSING DEVICES WITH AT LEAST ONE PART MOVED BY AN ELECTROMOTOR
PROCEDE DE COMMANDE DE LA FERMETURE DE DISPOSITIFS DE FERMETURE POURVUS D'AU MOINS UNE PARTIE DEPLACEE PAR MOTEUR ELECTRIQUE

(30) Priorität: 02.05.1997 DE 19718631
(43) Veröffentlichungstag der Anmeldung: 28.04.1999
(73) Patentinhaber: Conti Temic microelectronic GmbH, 90411 Nürnberg (DE)
(72) Erfinder: BUTSCHER, Karlheinz, D-88085 Langenargen (DE); DRIENDL, Dieter, D-88693 Deggenhausertal (DE); ULKE, Walter, D-88048 Friedrichshafen (DE)
(86) Internationale Anmeldenummer: PCT/EP1998/002524
(87) Internationale Veröffentlichungsnummer: WO 1998/050992

(56) Entgegenhaltungen:
- EP-A- 0 148 318
- DE-A- 3 514 223

## Beschreibung

Die Erfindung betrifft ein Verfahren zur Steuerung des Schließvorgangs von Schließvorrichtungen mit mindestens einem elektromotorisch bewegten Teil wie es aus der DE 33 46 366 C2 bekannt ist.

Schließvorrichtungen mit elektromotorisch bewegten Teilen sind zur Realisierung von mittels Fremdkraft durchgeführten Betätigungsvorgängen (Schließvorgänge, Öffnungsvorgänge) vielfältig in Gebrauch - beispielsweise im Kfz-Bereich für die elektrische Betätigung von Seitenfenstern, Schiebedächern und Schiebetüren oder bei Torschließvorrichtungen (Garagentore, Rolltore). Zur Erhöhung des Komforts für den Benutzer bzw. Bediener werden die Betätigungsvorgänge (insbesondere die Schließvorgänge) oftmals automatisch durchgeführt: der Benutzer bzw. Bediener muß nunmehr lediglich den Betätigungsvorgang initiieren und kann sich während des (voll)automatisch ablaufenden Betätigungsvorgangs auf anderweitige Aktivitäten konzentrieren.

Jedoch besteht bei automatisch ablaufenden Schließvorgängen (d.h. bei der Realisierung einer Automatikfunktion für den Schließvorgang), insbesondere bei durch den Benutzer bzw. Bediener nicht weiter überwachten oder vom Benutzer bzw. Bediener aus größerer Entfernung per Fernbedienung ausgelösten automatisch ablaufenden Schließvorgängen, die Gefahr des Einklemmens von Körperteilen oder Gegenständen. Aufgrund des hiermit verbundenen erheblichen Verletzungsrisikos ist zum Schutz der menschlichen Gesundheit für einige Schließvorrichtungen per Verordnung ein Einklemmschutz vorgeschrieben worden - beispielsweise wurde im Kfz-Bereich für Deutschland die Richtlinie Nr. 43 zum Paragraph 30 StVZO "Insassenschutz" erlassen und für die USA der "**N**ational **H**ighway **T**raffic **S**afety **A**dministration" (NHTSA) Standard 571.118 eingeführt. Gemäß diesen Verordnungen sind automatisch ablaufende Schließvorgänge nur unter bestimmten (mehr oder weniger strengen) Voraussetzungen erlaubt: insbesondere werden hierin das Anwendungsgebiet (bsp. Fensterheber und Schiebedächer von Kraftfahrzeugen), die maximal zulässige Klemmkraft (bsp. 100 N), die zur Überprüfung der Wirksamkeit,des Einklemmschutzes zu verwendenden Prüfkörper (bsp. deren Eigenschaften wie Elastizität, Federrate und Geometrie) und die Randbedingungen, unter denen der Einklemmschutz wirksam werden muß (bei Kraftfahrzeugen bsp. abgezogener Zündschlüssel und automatisch ablaufender Schließvorgang) festgelegt.

Zur Realisierung des Einklemmschutzes kann der Schließvorgang der Schließvorrichtung entweder direkt oder indirekt überwacht werden:
- bei direkten Verfahren wird der Schließraum selbst im Hinblick auf potentielle Hindernisse überwacht (beispielsweise durch Anbringen von Schaltleisten an der Schließkante oder durch optische Überwachung), was jedoch mit hohen Kosten verbunden ist,
- bei indirekten Verfahren wird die beim Einklemmvorgang entstehende Klemmkraft bestimmt und zwar entweder direkt (was wegen der hierfür benötigten Sensoren, beispielsweise Kraftsensoren oder Drehmomentsensoren, recht kostspielig ist) oder indirekt durch Erfassung und Auswertung der Meßwerte mindestens einer für die Belastung des Elektromotors charakteristischen Motorkenngröße (beispielsweise durch Auswertung der Antriebsdrehzahl und/oder Stromaufnahme und/oder Leistungsaufnahme und/oder Energieaufnahme des Elektromotorantriebs), d.h. durch Bewertung der Auswirkung der Klemmkraft auf den Antrieb des Elektromotors (Änderung der Antriebslast).

Bei dieser (aus Kostengründen gebräuchlichen) indirekten Bestimmung der Klemmkraft sollten jedoch nicht die absoluten Meßwerte der Motorkenngröße aufgrund deren Abhängigkeit von Temperaturschwankungen, Alterungserscheinungen und serienstreuungen zur Auswertung herangezogen werden; vielmehr wird in einer relativen Auswertung der momentane Meßwert der Motorkenngröße durch Vergleich mit einer Referenzmessung oder mehreren Referenzmessungen ausgewertet (d.h. es wird der Verlauf der Motorkenngröße bzw. die relative Änderung des momentanen Meßwerts der Motorkenngröße bezüglich eines zeitlich oder örtlich zurückliegenden Referenzwerts derselben Motorkenngröße ausgewertet). Beim Überschreiten eines vorgegebenen Grenzwerts (Auslöseschwellwerts) wird ein Einklemmereignis angenommen und hierauf eine bestimmte Reaktion der schließvorrichtung initiiert (beispielsweise wird eine Reversierung des Antrieb des Elektromotors vorgenommen oder der Motorstrom abgeschaltet).

Problematisch bei einem durch Bestimmung von Änderungen der Antriebslast "indirekt" realisierten Einklemmschutz ist jedoch die oftmals unzureichende Überwachung des Schließvorgangs und der hieraus resultierende ungenügende Einklemmschutz in der Anlaufphase der Schließvorrichtung unmittelbar nach der Aktivierung des Schließvorgangs, d.h. beim Anlaufen des Elektromotors von der ersten Bestromung an (vom stehendem Antrieb) bis zum stationären Betrieb (bis zum stationär laufendem Antrieb), insbesondere da in dieser Anlaufphase bereits ein beträchtlicher Schließweg zurückgelegt wird (bsp. wird bei Schließvorgängen von Fensterhebern und Schiebedächern bis zum stationären Betrieb ein Schließweg an der Schließkante in der Größenordnung Zentimeter zurückgelegt). Diese unzureichende Überwachung des Schließvorgangs liegt darin begründet, daß in der Anlaufphase
- noch keine Referenzmessung vorliegt bzw. noch kein geeigneter Referenzwert zur Verfügung steht,
- aufgrund der Massenträgheit der Schließvorrichtung und des Kraftaufbaus zur Überwindung der Haftreibmomente Änderungen der Antriebslast des Elektromotors auftreten, deren Charakteristik zudem von der Vorgeschichte des aktuellen Betätigungsvorgangs abhängt; insbesondere bereiten solche Schließvorgänge Probleme, die unmittelbar auf Öffnungsvorgänge folgen, da in diesen Fällen zunächst ein Ausgleich des Antriebsspiels ("Spielausgleich") der Schließvorrichtung (insbesondere des Spiels der Motor-/Getriebeanordnung) erfolgt. Demzufolge kann oftmals nicht zwischen der Belastungszunahme nach erfolgtem Spielausgleich (d.h. einem nach dem Spielausgleich entstehenden Kraftaufbau zur Überwindung der Haftreibungsgrenze) und der Belastungszunahme aufgrund eines tatsächlichen Einklemmereignisses unterschieden werden; d.h. eine Differenzierung zwischen der Anlaufphase eines "normalen" (ohne Einklemmereignis ablaufenden) Schließvorgangs und einem in der Anlaufphase auftretenden Einklemmereignis mit oftmals dem gleichen verlauf der Meßgröße ist nicht möglich,
- Verordnungen mit strengen Auflagen oftmals nicht erfüllt werden können; bsp. würden die im NHTSA-Standard 571.118 angegebenen Grenzwerte für die maximal zulässige Klemmkraft bei einer ausschließlich im stationären Betrieb erfolgenden Aktivierung des Einklemmschutzes weit überschritten.

Als eine Möglichkeit zur Lösung dieser Problematik wurde vorgeschlagen, den automatisch ablaufenden Schließvorgang (die Automatikfunktion) des elektromotorisch bewegten Teils erst dann freizugeben, wenn bereits ein definierter schließweg zurückgelegt wurde. Nachteilig hierbei ist jedoch, daß eine bei einer Betätigung des Schließvorgangs oftmals erwünschte sofortige Aktivierung der Automatikfunktion nicht möglich ist, und daß die Einklemmgefahr nicht signifikant reduziert wird.

Eine andere - in der eingangs erwähnten gattungsbildenden DE 33 46 366 C2 beschriebene - Möglichkeit zur Lösung dieser Problematik besteht darin, jedem Schließvorgang eine kurzzeitige Bewegung in Öffnungsrichtung (einen kurzzeitigen Öffnungsvorgang) mit festem Öffnungsweg vorzuschalten; durch den kurzzeitigen Öffnungsvorgang wird ein zusätzlicher weg des elektromotorisch bewegten Teils (Schließelementes) gewonnen, innerhalb dessen der Antrieb ohne Einklemmgefahr den stationären Betrieb erreichen kann; d.h. einerseits sind Spielausgleich und anschließende Belastungszunahme (verspannung der mechanischen Anordnung der Schließvorrichtung) beim Erreichen der ursprünglichen Position des elektromotorisch bewegten Teils bereits abgeschlossen und andererseits steht bereits ein geeigneter Referenzwert als Meßwert der Motorkennngröße für die Auswertung zur Verfügung. Gemäß der DE 33 46 366 C2 wird unter Auswertung der schließwegabhängigen Meßwerte des als Motorkennngröße herangezogenen Motorstroms vorgeschlagen, entweder den Öffnungsweg über ein konstantes Zeitkriterium für den Öffnungsvorgang zu definieren und den Einklemmschutz mittels eines Zeitgliedes mit konstanter Zeitdauer zu deaktivieren (für derartige zeitbasierte Aktivierungen des Einklemmschutzes ist ein präzise definierbarer Aktivierungszeitpunkt essentiell, um Fehlreaktionen wie fälschliches Erkennen oder Nicht-Erkennen eines Einklemmens zu vermeiden) oder aber eine Aktivierung des Einklemmschutzes erst nach dem Auftreten des ersten negativen Stromgradienten im positiven Bereich der schließwegabhängigen Stromkurve zuzulassen (in diesem Fall muß die Auswertung des Motorstromes schaltungstechnisch für bipolare Ströme konzipiert werden, um zwischen positiven und negativen Betriebsströmen unterscheiden zu können, was mit einem erheblichen schaltungstechnischen Aufwand verbunden ist).

Probleme werden bei beiden in der DE 33 46 366 C2 vorgeschlagenen verfahren dadurch verursacht, daß einerseits die Schließvorrichtungen immer ein nennenswertes Getriebespiel aufweisen (bsp. verursacht das Getriebespiel nach einer Umkehr der Bewegungsrichtung in der schließwegabhängigen Stromkurve des als Meßgröße herangezogenen Motorstroms zwischen dem Maximum des Einschaltstroms und dem stationären Betriebszustand ein lokales Stromminimum, welches oftmals das Niveau der Leerlaufstromaufnahme des Elektromotors erreicht) und daß andererseits die Eigenschaften der Schließvorrichtung (bsp. das Antriebsspiel bzw. der Ausgleich des Antriebsspiels bei Richtungsumkehr oder die Eigenelastizität) sehr stark von Serienstreuungen, den Eigenschaften der mechanischen Komponenten der Schließvorrichtung (bsp. nachlassende Vorspannung des Seiles bei Seilzug-Heber-Mechanismen), den Umgebungsbedingungen (Umgebungstemperatur etc.) und den Betriebsbedingungen (Alterungseffekte etc.) abhängen und daher gravierende Änderungen ihrer Charakteristik in der Anlaufphase auftreten können. Demzufolge ist bei beiden in der DE 33 46 366 C2 vorgeschlagenen verfahren von Nachteil, daß einerseits Fehlreaktionen verursacht werden können und daß andererseits der (fest vorgegebene) Öffnungsweg für eine praxistaugliche Auslegung bei Massenproduktionsgütern anhand der ungünstigsten Umstände unter Berücksichtigung aller Randbedingungen (d.h. ausreichend lang) festgelegt werden muß (dieser "worstcase-wert kann bis zu 10% des maximalen Schließwegs betragen), so daß der Antrieb unnötig lange in Öffnungsrichtung bewegt wird und hierdurch die Automatikfunktion (der Schließvorgang) stark verzögert sowie der Bedienerkomfort stark eingeschränkt wird.

Der Erfindung liegt die Aufgabe zugrunde, ein Verfahren gemäß dem Oberbegriff des Patentanspruchs 1 anzugeben, das die genannten Nachteile vermeidet und einen wirksamen Einklemmschutz unter allen Umgebungsbedingungen bzw. Betriebsbedingungen der Schließvorrichtung ohne Einschränkungen des Bedienerkomforts gewährleistet.
Diese Aufgabe wird gemäß der Erfindung durch die Merkmale im Kennzeichen des Patentanspruchs 1 gelöst.
Vorteilhafte Weiterbildungen und Ausgestaltungen des Verfahrens sind Bestandteil der weiteren Ansprüche.

Beim beschriebenen verfahren wird zur Vermeidung von Einklemmereignissen in der Anlaufphase jedem Schließvorgang eine Bewegung in Öffnungsrichtung mit variablem Öffnungsweg vorgeschaltet; der variable öffnungsweg wird in einem Anpaßvorgang mit mindestens einem Anpaßschritt unter Berücksichtigung zurückliegender Betätigungsvorgänge (insbesondere Schließvorgänge) sowie vorzugsweise unter Berücksichtigung zu erfüllender Verordnungen bzw. Vorschriften und optional unter Berücksichtigung des Anlaufverhaltens der Schließvorrichtung hinsichtlich Spielausgleich des Antriebsspiels adaptiv vorgegeben - d.h. die Bewegung in Öffnungsrichtung wird in einem Anpaßvorgang adaptiv an die Erfordernisse der jeweiligen Schließvorrichtung (des jeweiligen Antriebes) angepaßt. Nach Durchlaufen des vorgegebenen variablen Öffnungswegs erfolgt eine Drehrichtungsumkehr des Antriebs und eine Bewegung in Schließrichtung; wenn der in Schließrichtung zurückgelegte Schließweg den in Öffnungsrichtung zurückgelegten Öffnungsweg erreicht bzw. übersteigt, erfolgt die Aktivierung der Einklemmschutzes.

In einem ersten Anpaßschritt des Anpaßvorgangs zur Vorgabe des variablen Öffnungswegs wird durch absolute oder inkrementale Positionserfassung ermittelt, weicher Schließweg nach erfolgter Drehrichtungsumkehr des Antriebs (des Ankers des Elektromotors) beim Schließvorgang vom Punkt der Drehrichtungsumkehr aus (vom Ausgangspunkt in Schließrichtung) bis zum Erreichen des stationären Betriebs zurückgelegt wird; dieser Schließweg kann abgespeichert werden und dient als Vorgabewert für den in Öffnungsrichtung zurückzulegenden Öffnungsweg des nächsten Schließvorgangs. Der so ermittelte Vorgabewert kann ggf. mit einem additiven, antriebsspezifischen Offsetwert ("Sicherheitszuschlag") zur Gewährleistung einer hohen Funktionssicherheit beaufschlagt werden; anhand gesetzlicher Verordnungen bzw. Vorschriften kann ein (nicht zu unterschreitender) Minimalwert für den Vorgabewert abgeleitet werden. Beim ersten Schließvorgang (hier steht noch kein derartig ermittelter Schließweg zur Verfügung) kann der Vorgabewert für den Öffnungsweg anhand der antriebsspezifischen Gegebenheiten der schließvorrichtung empirisch vorgegeben werden. Die Häufigkeit bzw. Wiederholrate dieses ersten Anpaßschritts kann abhängig vom Einsatzgebiet und der Verhaltensweise der Schließvorrichtung bzw. des Antriebes festgelegt werden; bsp. kann der erste Anpaßschritt und damit die Aktualisierung des Vorgabewerts für den Öffnungsweg einmalig, mehrfach oder bei jedem Schließvorgang durchgeführt werden. Zur Bestimmung der beiden für den ersten Anpaßschritt erforderlichen schließwegabhängigen Positionen (Positionsbezüge) Ausgangspunkt in Schließrichtung (Punkt der Drehrichtungsumkehr) einerseits und Startpunkt des stationären Betriebs andererseits wird der (schließwegabhängige) verlauf mindestens einer Motorkenngröße ausgewertet; als auszuwertende bzw. zu bewertende Motorkenngröße kann bsp. der Motorstrom, die Ankerperiodendauer, die Leistungsaufnahme, die Energieaufnahme, die Kraftabgabe oder die Drehmomentabgabe des Elektromotors herangezogen werden.

In einem weiteren Anpaßschritt des Anpaßvorgangs zur adaptiven Anpassung des Öffnungswegs können die Eigenschaften der Schließvorrichtung, insbesondere die Eigenschaften des Antriebs der Schließvorrichtung berücksichtigt werden und die Vorgabewerte für den in Öffnungsrichtung zurückzulegenden Öffnungsweg entsprechend korrigiert werden; hierdurch kann der als Sicherheitszuschlag vorgesehene Offsetwert entweder ganz oder teilweise entfallen. Vorzugsweise wird hierbei der ermittelte (und ggf. abgespeicherte) Wert des Antriebsspiels (der "Spielwert") der Schließvorrichtung beim Vorgabewert für den in Öffnungsrichtung zurückzulegenden Öffnungsweg des nächsten Schließvorgangs berücksichtigt, insbesondere wird der ermittelte Spielwert dem bei der Drehrichtungsumkehr des Antriebs (Übergang von der Bewegung in Öffnungsrichtung zur Bewegung in schließrichtung) bei jedem Schließvorgang auftretenden Spielausgleich (dem hieraus resultierenden Spielwert) gleichgesetzt. Der Vorgabewert für den Öffnungsweg wird abhängig davon variiert, ob beim aktuellen Schließvorgang in der Anlaufphase ein Ausgleich dieses Antriebsspiels (ein Spielausgleich) in Öffnungsrichtung stattfinden muß, d.h. ob zu Beginn der (immer stattfindenden) Bewegung in Öffnungsrichtung ein Spielausgleich erfolgte: bei einem Schließvorgang mit Spielausgleich in Öffnungsrichtung tritt sowohl bei der Initiierung der Bewegung in Öffnungsrichtung als auch bei der Drehrichtungsumkehr des Antriebs ein Spielausgleich auf (mit einem als gleichgroß angenommenen Spielwert), so daß der (den spielausgleich bei der Drehrichtungsumkehr beinhaltende) Vorgabewert für den Öffnungsweg richtig gewählt ist; bei einem Schließvorgang ohne Spielausgleich in Öffnungsrichtung tritt dagegen nur bei der Drehrichtungsumkehr des Antriebs ein Spielausgleich auf, so daß der (den Spielausgleich bei der Drehrichtungsumkehr beinhaltende) Vorgabewert für den Öffnungsweg eigentlich zu groß gewählt ist und daher um den Spielwert (Wert des Antriebsspiels) reduziert werden kann. Die Häufigkeit bzw. Wiederholrate des weiteren Anpaßschritts (insbesondere die Ermittlung des Spielwerts und die Berücksichtigung des Spielwerts beim Vorgabewert für den Öffnungsweg) kann abhängig vom Einsatzgebiet und der Verhaltensweise der Schließvorrichtung bzw. des Antriebs festgelegt werden; bsp. kann dieser weitere Anpaßschritt einmalig, mehrfach oder bei jedem Schließvorgang durchgeführt werden. Insbesondere wird bei einer Berücksichtigung der Einflußgröße "mechanisches Spiel des Antriebs" (Antriebsspiel) vorzugsweise bei jedem Schließvorgang der ermittelte Spielwert für die Vorgabe des Öffnungswegs herangezogen, wohingegen für die Ermittlung des Spielwerts selbst (bzw. dessen Aktualisierung) eine geringe Wiederholrate ausreicht, da sich in den meisten Anwendungsfällen das mechanische Antriebsspiel der Schließvorrichtung nur sehr langsam ändert und somit letzlich nur das Langzeitverhalten von Bedeutung ist.

Das Vorhandensein eines Spielausgleichs in Öffnungsrichtung (und die hiermit verbundene Auswirkung auf den Vorgabewert für den Öffnungsweg) wird vorzugsweise anhand des dem aktuellen Schließvorgang vorausgehenden (letztmaligen) Betätigungsvorgangs der Schließvorrichtung bestimmt (d.h. anhand der Betätigungsrichtung des Betätigungsvorgangs, der direkt vor dem schließvorgang resp. der direkt vor der der Bewegung in Schließrichtung vorangehenden Bewegung in Öffnungsrichtung durchgeführt wurde). Demzufolge wird bei der Vorgabe des Öffnungsweges berücksichtigt, ob als letztmaliger Betätigungsvorgang ein Öffnungsvorgang oder ein Schließvorgang durchgeführt wurde bzw. ob vor der Bewegung in Öffnungsrichtung eine Drehrichtungsumkehr stattgefunden hat: falls als letztmaliger Betätigungsvorgang ein Schließvorgang durchgeführt wurde (Drehrichtungsumkehr des Antriebs vor der Bewegung in Öffnungsrichtung), kann in den meisten Fällen auf das Vorhandensein eines Spielausgleichs in Öffnungsrichtung geschlossen werden, der Vorgabewert für den Öffnungsweg wird nicht verändert; falls als letztmaliger Betätigungsvorgang ein Öffnungsvorgang durchgeführt wurde (keine Drehrichtungsumkehr des Antriebs vor der Bewegung in Öffnungsrichtung), ist kein Spielausgleich in Öffnungsrichtung vorhanden und der Vorgabewert für den Öffnungsweg wird um den Spielwert reduziert. Die Bestimmung der Richtung des letztmaligen Betätigungsvorgangs bzw. das Erkennen einer Drehrichtungsumkehr des Antriebs vor der Bewegung in Öffnungsrichtung kann bsp. mittels Auswertung der Schalterstellung der zur Vorgabe der Schließrichtung vorgesehenen Schalter erfolgen oder bsp. mit Hilfe eines die aktuelle relative Position des elektromotorisch bewegten Teils charakterisierenden Zählwerts erfolgen (bsp. anhand des mittels Hallsensoren generierten Zählerstands eines je nach Position des elektromotorischen Teils inkrementierten oder dekrementierten Zählers).

Die Ermittlung des spielwerts erfolgt durch einen Vergleich der Schließwege bei einem Schließvorgang mit Drehrichtungsumkehr des Antriebs (d.h. bei einem auf einen Öffnungsvorgang folgenden schließvorgang) und einem Schließvorgang ohne vorhergehende Drehrichtungsumkehr des Antriebs (d.h. bei einem auf einen Schließvorgang folgenden Schließvorgang) unter Auswertung positionsbasierter Unterschiede dieser Schließwege: hierzu kann ein Vergleich des gesamten zurückgelegten Schließwegs vom Punkt der Drehrichtungsumkehr (vom Ausgangspunkt in Schließrichtung) bis zum Startpunkt (Erreichen) des stationären Betriebs herangezogen werden (der Spielwert ergibt sich aus der Differenz dieser Schließwegdifferenzen) oder aber ein vergleich der Schließwege bei einem oder mehreren charakteristischen Punkten im schließwegabhängigen Verlauf der Motorkenngröße (beispielsweise ein Vergleich der Schließwege beim Beginn der Kraftschlußphase des Antriebs oder ein Vergleich der Schließwege beim Startpunkt des stationären Betriebs).

Der ermittelte Spielwert kann zusäzlich optional anhand einer Plausibilitätsbetrachtung unter Heranziehung des schließwegabhängigen Verlaufs mindestens einer Motorkenngröße validiert werden - die zusätzlich (optional) durchgeführte Plausibilitätsbetrachtung auf Vorhandensein eines mechanischen Antriebsspiels erfolgt insbesondere bei Anwendungsfällen oder Ereignissen, bei denen das mechanische Antriebsspiel unabhängig vom letztmaligen Betätigungsvorgang (insbesondere unabhängig von der Bewegungsrichtung des letztmaligen Betätigungsvorgangs) beeinflußt werden kann (beispielsweise durch eine zusätzlich vorhandene Handverstellung der Schließvorrichtung oder durch externe Beschleunigungseinflüsse auf die bewegten Teile des Antriebs); hierzu wird der nach Durchlaufen des Öffnungswegs und erfolgter Drehrichtungsumkehr ermittelte schließwegabhängige Verlauf mindestens einer Motorkenngröße (bsp. der Motorstrom und/oder die Motordrehzahl) anhand von Plausibilitätskriterien analysiert, insbesondere durch vergleich des beim aktuellen Schließvorgang ermittelten Extremwerts der Motorkenngröße (bsp. des Minimums des Motorstroms oder/und des Maximums der Motordrehzahl) mit einem über eine Vielzahl von Schließvorgängen ermittelten (langzeitgefilterten) Extremwert (bsp. muß bei einer Analyse des schließwegabhängigen Verlaufs der Motorkenngröße Motorstrom der Leerlaufstrom in der Leerlaufphase des Ankers ein antriebsspezifisches Niveau für einen definierten Zeitraum unterschreiten). Falls die Plausibilitätsbetrachtung negativ ausfällt (falls kein mechanisches Antriebsspiel vorhanden ist), wird der ermittelte Spielwert nicht berücksichtigt (insbesondere nicht abgespeichert), d.h. es erfolgt keine Aktualisierung des Spielwertes.

Vorteilhafterweise kann mit dem vorgestellten verfahren
- ein Einklemmereignis in allen Phasen des Schließvorgangs unter Erfüllung aller Verordnungen mit hoher Zuverlässigkeit detektiert werden, wodurch das Verfahren einen wirksamen Einklemmschutz und somit eine hohe Sicherheit gewährleistet,
- die dem schließvorgang vorausgehende Bewegung in Öffnungsrichtung und damit der Öffnungsweg so kurz wie möglich gehalten werden, so daß ein gefahrensicherer Schließvorgang ohne Komfortnachteile für den Bediener realisierbar ist,
- durch die wahl eines Positionsbezuges bei der Analyse der Anlaufphase eine weitgehende Unabhängigkeit von der zumeist variablen Versorgungsspannung des Antriebes der Schließvorrichtung erreicht werden,
- bei einer Berücksichtigung der Eigenschaften der Schließvorrichtung, insbesondere bei einer Auswertung des Antriebsspiels (und damit bei einer Berücksichtigung von Alterungserscheinungen im Antrieb) der Sicherheitsfaktor für die Vorgabe des Öffnungsweges reduziert werden, d.h. der Öffnungsweg wird bei Schließvorgängen ohne vorherige Drehrichtungsumkehr auf das notwendige Maß reduziert.

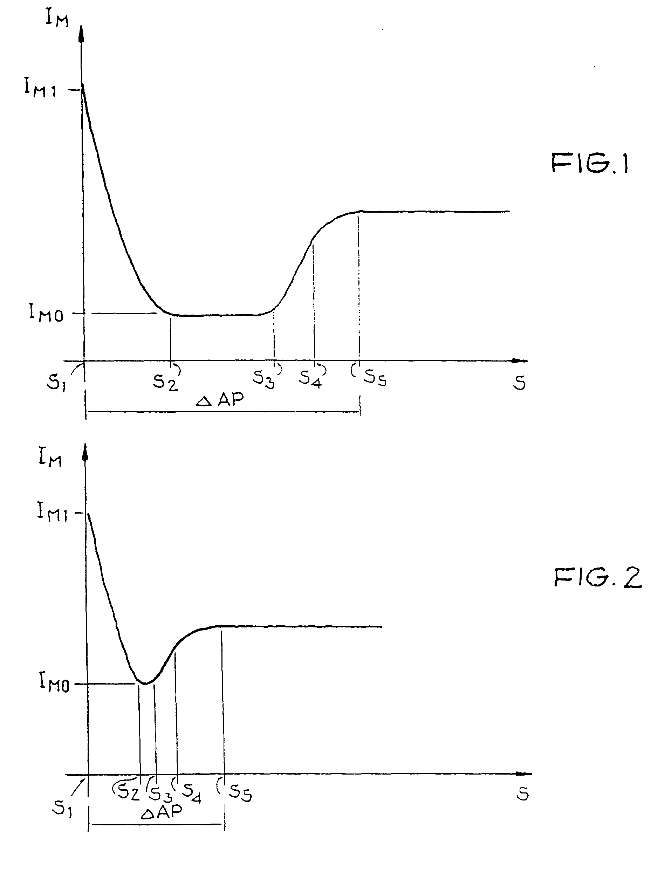

Im folgenden wird das Verfahren im Zusammenhang mit der Zeichnung (Figuren 1 und 2) am Beispiel des elektromotorisch bewegten Fensterheber-Antriebs eines Kraftfahrzeugs bei Verwendung des Motorstroms als Motorkenngröße beschrieben. Hierbei zeigen:
- Figur 1: den schließwegabhängigen verlauf der Motorkenngröße Motorstrom I_{M} in der Anlaufphase eines Schließvorgangs mit Spielausgleich,
- Figur 2: den schließwegabhängigen Verlauf der Motorkenngröße Motorstrom I_{M} in der Anlaufphase eines Schließvorgangs ohne Spielausgleich.

Gemäß den Figuren 1 und 2 mit dem (schließwegabhängigen) Verlauf des Motorstromes I_{M} über einer relativ definierten Position des Schließwegs s - diese wird beispielsweise aus der Anzahl der Ankerumdrehungen gebildet- ist die Anlaufphase des Schließwegs bzw. das Anlaufverhalten des Fensterheber-Antriebs durch folgende Ereignisse charakterisiert.

Nach der Vorgabe eines Schließbefehls für die Fensterscheiben des Kraftfahrzeugs (initialisierung des Schließvorgangs) wird der Fensterheber-Antrieb aktiviert. In einer Anlaufphase des Schließvorgangs mit Spielausgleich (Figur 1) erfolgt zunächst ein Ausgleich des Antriebsspiels der Motor-/Getriebeanordnung; während dieses Spielausgleichs dreht der Elektromotor bereits, wobei die auf den Elektromotor wirkende Last relativ gering ist; in einer Anlaufphase des Schließvorgangs ohne Spielausgleich (Figur 2), d.h. ohne Ausgleich des Antriebsspiels der Motor-/Getriebeanordnung (insbesondere bei Anläufen ohne Drehrichtungsumkehr), ist die Mechanik der Kraftfahrzeugtüre noch vom vorhergehenden Hochlauf der Fensterscheibe vorgespannt (man befindet sich bereits im sogenannten Kraftschluß). Nach diesem mehr oder weniger ausgeprägten Spielausgleich nimmt die Belastung des elektromotorisch bewegten Fensterheber-Antriebs bis zum Erreichen der Haftreibungsgrenze zu, wobei der Verlauf der Belastungszunahme im wesentlichen durch die Steifigkeit bzw. die Elastizität der Getriebemechanik und des Türblechs der Kraftfahrzeugtüre geprägt ist; nach Überschreiten der Haftreibungsgrenze bewegt sich die Fensterscheibe und der Elektromotor wird mit der näherungsweise konstanten Reibkraft der Motor-/Getriebeanordnung belastet.

Demzufolge kann gemäß den Figuren 1 und 2 der Verlauf des Motorstroms I_{M} in der Anlaufphase des Schließvorgangs, d.h. nach der Aktivierung des Fensterheber-Antriebs bis zum Erreichen des stationären Betriebs (Scheibenweg ca. 2 cm), folgendermaßen unterteilt werden:
- in die Anstiegsphase mit einer endlich hohen Einschaltstromspitze (Anlaufstromspitze) beim Schließweg s₁ (der Anker des Elektromotors dreht sich noch nicht); die Amplitude der Anlaufstromspitze (das Maximum I_{M1} des Motorstroms I_{M}) wird im wesentlichen von der Versorgungsspannung und dem lnnenwiderstand des Ankers bestimmt,
- in eine Beschleunigungsphase des Ankers zwischen den Schließwegen s₁ und s₂, in der teilweise das Spiel des Fensterheber-Antriebs (Getriebeanordnung, Hebemechanik) ausgeglichen wird; der Stromgradient bzw. die aktuelle Motorstrom-Schließweg-Rate dl_{M}/ds während des Stromabfalls (die fallende Flanke) wird im wesentlichen durch das Massenträgheitsmoment des Ankers des Elektromotors bestimmt, das Minimum I_{MO} des Motorstroms I_{M} beim Schließweg S₂ in erster Näherung von der Gleitreibung der Motor-/Getriebeanordnung,
- in eine Leerlaufphase des Ankers zwischen den Schließwegen s₂ und s₃, in der das Spiel des Antriebs vollständig ausgeglichen wird (Minimum I_{MO} des Motorstroms I_{M}); gemäß Figur 2 ist diese Leerlaufphase in der Anlaufphase des Schließvorgangs ohne Spielausgleich nur schwach ausgeprägt,
- in eine Kraftschlußphase zwischen den Schließwegen s₃ und s₄, in der der Kraftaufbau zwischen der Getriebeanordnung und der Antriebslast erfolgt und in der die Kraftfahrzeugtüre (die Türmechanik, insbesondere das Türgestänge und das Türblech) abhängig von deren Steifigkeit mit einer bestimmten Verformungskraft verformt wird, so daß der Elektromotor demnach quasi gegen eine Feder mit progressiver Federkonstante arbeitet; beim Schließweg s₄ wird das Losbrechmoment der Fensterscheibe erreicht,
- in eine Beschleunigungsphase der Antriebslast zwischen den Schließwegen s₄ und s₅; die Fensterscheibe beginnt sich nach dem Erreichen des Losbrechmoments zu bewegen, wobei sich in Abhängigkeit der Schwergängigkeit des Fensterheber-Antriebs (insbesondere durch witterungsbedingte und alterungsbedingte Einflüsse der Fensterscheibe) unterschiedliche Kurvenverläufe ergeben können,
- beim Schließweg s₅ beginnt der stationäre Betrieb (hier soll die Aktivierung der Einklemmschutzfunktion erfolgen); der Motorstrom I_{M} ist konstant, d.h. die Fensterscheibe bewegt sich mit konstanter Geschwindigkeit.

Da in der Anlaufphase des schließvorgangs dynamische Änderungen der Antriebslast mit großer Amplitude wirken, wird zur Gewährleistung eines wirksamen Einklemmschutzes in der Anlaufphase der Fensterheber-Antrieb nach der Aktivierung des Schließvorgangs zunächst in Öffnungsrichtung bewegt und mittels eines Anpaßvorgangs ein variabler Öffnungsweg für die Fensterscheibe unter Heranziehung des schließwegabhängigen Verlaufs mindestens einer Motorkenngröße (bsp. des Motorstroms I_{M}) vorgegeben:
- in einem ersten Anpaßschritt des Anpaßvorgangs wird ermittelt, welche Ankerpositionsänderung ΔAP nach einer erfolgten Drehrichtungsumkehr des Antriebs beim Schließvorgang in Schließrichtung von der Einschaltstromspitze (Schließweg s₁) bis zum Erreichen des stationären Betriebs (Schließweg s₅) zurückgelegt wird. Dieser Wert der Ankerpositionsänderung ΔAP zuzüglich eines Sicherheitszuschlages (Offsetwertes) wird als Vorgabewert für den Öffnungsweg beim nachfolgenden Schließvorgang herangezogen. Der Beginn des stationären Betriebes wird anhand der aktuellen Motorstrom-Schließweg-Rate dI_{M}/ds dergestalt definiert, daß diese (nach Vorliegen einer antriebsspezifischen, plausiblen aktuellen Motorstrom-Schließweg-Rate dl_{M}/ds mit positivem Vorzeichen in der Kraftschlußphase) einen antriebsspezifischen Grenzwert unterschreiten muß.
- in einem zweiten Anpaßschritt wird der Vorgabewert für den Öffnungsweg in Abhängigkeit der Systemeigenschaften der Schließvorrichtung variiert; insbesondere wird der Vorgabewert für den Öffnungsweg in Abhängigkeit des Anlaufverhaltens der Schließvorrichtung unter Berücksichtigung des mechanischen Antriebsspiels der Schließvorrichtung variiert. Bei dieser Berücksichtigung des Antriebsspiels (des Spielwerts des Antriebsspiels) wird ermittelt, ob vor Beginn der der Bewegung in Schließrichtung vorangehenden Bewegung in Öffnungsrichtung eine Drehrichtungsumkehr des Antriebs stattgefunden hat: bei einer Bewegung in Öffnungsrichtung ohne vorhergehende Drehrichtungsumkehr des Antriebs, d.h. bei einem Öffnungsvorgang als letztmaligem Betätigungsvorgang (hier muß kein Spielausgleich stattfinden) wird der Vorgabewert für den Öffnungsweg um den Spielwert reduziert.
   Die Ermittlung des Spielwerts erfolgt (entweder mittels gesonderter Messungen oder im Rahmen "normaler" Schließvorgänge) durch Vergleich der Anlaufcharakteristika für die Schließvorgänge mit und ohne vorhergehender Drehrichtungsumkehr des Antriebs und aus den hieraus resultierenden positionsbasierten Unterschieden des schließwegabhängigen Verlaufs des Motorstroms in der Anlaufphase: bsp. durch Vergleich (Differenzbildung) der Werte der relativen Ankerpositionsänderung ΔAP oder durch Vergleich (Differenzbiläung) der Schließwege s₃ beim Beginn der Kraftschlußphase (dieser beginn wird bsp. anhand des Überschreitens eines bestimmten antriebsspezifischen Grenzwerts durch die positive Motorstrom-Schließweg-Rate dl_{M}/ds festgelegt).
   Der so ermittelte Spielwert kann bsp. anhand des Niveaus des Leerlaufstromes (des Minimums I_{M0} des Motorstroms I_{M}) in der Leerlaufphase des Ankers zwischen den Schließwegen s₂ und s₃ validiert werden: mechanisches Spiel liegt nur dann vor, wenn der Leerlaufstrom (das Minimum I_{M0} des Motorstroms I_{M}) ein antriebsspezifisches Niveau für einen definierten zeitraum unterschreitet und/oder wenn das Niveau des Leerlaufstromes um einen antriebsspezifischen Betrag kleiner ist als das Minimum I_{M0} des Motorstroms I_{M} in einer Anlaufphase ohne mechanisches Spiel. Falls die Validierung negativ ausfällt (Vorliegen eines "scheinbaren", bsp. durch ein Schlagloch verursachten Spiels), wird der ermittelte Spielwert nicht berücksichtigt.

Die beispielhaft für die Motorkenngröße Motorstrom durchgeführten Betrachtungen können analog auch auf (eine oder mehrere) andere Motorkenngrößen übertragen werden; bsp. kann auch der schließwegabhägige bzw. positionsabhängige Verlauf der Motorkenngrößen Ankerperiodendauer, Leistungsaufnahme, Energieaufnahme, Kraftabgabe oder Drehmomentabgabe ausgewertet bzw. bewertet werden.

## Patentansprüche

1. Verfahren zur Steuerung des Schließvorgangs von Schließvorrichtungen mit mindestens einem elektromotorisch bewegten Teil, bei dem zur Gewährleistung eines Einklemmschutzes in der Anlaufphase der Schließvorrichtung unmittelbar nach der Aktivierung des schließvorgangs vor der Bewegung in Schließrichtung zunächst eine Bewegung in Öffnungsrichtung mit bestimmtem Öffnungsweg durchgeführt wird, **dadurch gekennzeichnet,**
• **daß** der Öffnungsweg mittels eines Anpaßvorgangs mit mindestens einem Anpaßschritt variierbar vorgegeben wird,
• und **daß** der Öffnungsweg mindestens in Abhängigkeit eines zurückliegenden Betätigungsvorgangs der Schließvorrichtung variiert wird.

2. verfahren nach Anspruch 1, **dadurch gekennzeichnet, daß** in einem ersten Anpaßschritt als Öffnungsweg des aktuellen Schließvorgangs der beim vorausgehenden schließvorgang in Schließrichtung bis zum Erreichen des stationären Betriebs der Schließvorrichtung zurückgelegte Schließweg vorgegeben wird.

3. Verfahren nach Anspruch 2, **dadurch gekennzeichnet, daß** der in Schließrichtung zurückgelegte Schließweg mittels absoluter oder inkrementaler Positionserfassung bestimmt wird.

4. Verfahren nach einem der Ansprüche 1 bis 3, **dadurch gekennzeichnet, daß** ein Minimalwert für den Öffnungsweg unter Berücksichtigung zu erfüllender Verordnungen und/oder Vorschriften vorgegeben wird.

5. Verfahren nach einem der Ansprüche 1 bis 4, **dadurch gekennzeichnet, daß** der Öffnungsweg mit einem additiven Offsetwert als Sicherheitszuschlag beaufschlagt wird.

6. Verfahren nach einem der Ansprüche 1 bis 5, **dadurch gekennzeichnet, daß** in einem zweiten Anpaßschritt der Öffnungsweg in Abhängigkeit der Systemeigenschaften der Schließvorrichtung variiert wird.

7. verfahren nach Anspruch 6, **dadurch gekennzeichnet, daß** der öffnungsweg in Abhängigkeit des Anlaufverhaltens der Schließvorrichtung unter Berücksichtigung des mechanischen Antriebsspiels der Schließvorrichtung variiert wird.

8. verfahren nach Anspruch 7, **dadurch gekennzeichnet, daß** der Öffnungsweg in Abhängigkeit des ermittelten Spielwerts des mechanischen Antriebsspiels variiert wird.

9. verfahren nach Anspruch 8, **dadurch gekennzeichnet, daß** der ermittelte Spielwert dem beim Übergang von der Bewegung in Öffnungsrichtung zur Bewegung in Schließrichtung auftretenden Ausgleich des mechanischen Antriebsspiels gleichgesetzt wird.

10. verfahren nach Anspruch 9, **dadurch gekennzeichnet, daß** der Öffnungsweg bei einer ohne Ausgleich des mechanischen Antriebsspiels stattfindenden Bewegung in Öffnungsrichtung um den ermittelten Spielwert reduziert wird.

11. Verfahren nach Anspruch 10, **dadurch gekennzeichnet, daß** das Vorhandensein eines Ausgleichs des mechanischen Antriebsspiels anhand der Bewegungsrichtung des dem aktuellen Schließvorgang vorausgehenden Betätigungsvorgangs der Schließvorrichtung festgelegt wird.

12. Verfahren nach Anspruch 11, **dadurch gekennzeichnet, daß** die Bewegungsrichtung des dem aktuellen Schließvorgang vorausgehenden Betätigungsvorgangs mittels Positionszählern bestimmt wird.

13. Verfahren nach Anspruch 11, **dadurch gekennzeichnet, daß** die Bewegungsrichtung des dem aktuellen Schließvorgang vorausgehenden Betätigungsvorgangs durch Auswertung der Schalterstellung eines Betätigungsschalters bestimmt wird.

14. verfahren nach einem der Ansprüche 8 bis 13, **dadurch gekennzeichnet, daß** der Spielwert durch Vergleich des schließwegabhängigen Verlaufs mindestens einer Motorkenngröße des Elektromotors bei einem schließvorgang mit vorausgehendem Schließvorgang und bei einem Schließvorgang mit vorausgehendem Öffnungsvorgang ermittelt wird.

15. Verfahren nach Anspruch 14, **dadurch gekennzeichnet, daß** der Spielwert durch vergleich der bis zum Erreichen charakteristischer Punkte im schließwegabhängigen Verlauf der mindestens einen Motorkenngröße des Elektromotors zurückgelegten Schließwege ermittelt wird.

16. verfahren nach einem der Ansprüche 8 bis 15, **dadurch gekennzeichnet, daß** für den ermittelten Spielwert eine Plausibilitätskontrolle unter Verwendung des schließwegabhängigen Verlaufs mindestens einer Motorkenngröße durchgeführt wird.

17. Verfahren nach Anspruch 16, **dadurch gekennzeichnet, daß** die Plausibilitätskontrolle unter Verwendung eines Extremwerts der mindestens einen Motorkenngröße durchgeführt wird.

18. Verfahren nach einem der Ansprüche 1 bis 17, **dadurch gekennzeichnet, daß** als Motorkenngröße zumindest der Motorstrom herangezogen wird.

## Claims

1. Method for controlling the closing process of closing devices with at least one electric-motor driven part, in which, for ensuring jamming protection during the starting phase of the closing device immediately after the activation of the closing process, a movement in the opening direction with a predetermined distance covered for opening is first carried out prior to the movement in the closing direction, **characterized in that**
• the distance covered for opening is variably predetermined by means of an adapting process with at least one adapting step; and
• the distance covered for opening is varied at least depending on a previous ac tuating process of the closing device.

2. Method according to claim 1, **characterized in that** in a first adapting step the distance covered for closing in the previous closing process in the closing direction until reaching the steady-state operation of the closing device is predetermined as the distance covered for opening in the current closing process.

3. Method according to claim 2, **characterized in that** the distance covered for closing in the closing direction is determined by means of absolute or incremental position detection.

4. Method according to any one of claims 1 to 3, **characterized in that** a minimum value for the distance covered for opening is predetermined considering decrees and/or regulations that have to be met.

5. Method according to any one of claims 1 to 4, **characterized in that** the distance covered for opening is increased by an additive offset value as an increased factor of safety.

6. Method according to any one of claims 1 to 5, **characterized in that** in a second adapting step the distance covered for opening is varied depending on the system characteristics of the closing device.

7. Method according to claim 6, **characterized in that** the distance covered for opening is varied depending on the starting behaviour of the closing device considering the mechanical driving play of the closing device.

8. Method according to claim 7, **characterized in that** the distance covered for opening is varied depending on the determined play value of the mechanical driving play.

9. Method according to claim 8, **characterized in that** the determined play value is equated with the compensation for the mechanical driving play, said compensation occurring at the transition from the movement in the opening direction to the movement in the closing direction.

10. Method according to claim 9, **characterized in that** the distance covered for opening is reduced by the determined play value in the event of a movement in the opening direction that occurs without a compensation for the mechanical driving play.

11. Method according to claim 10, **characterized in that** the existence of a compensation for the mechanical driving play is determined on the basis of the moving direction of that actuating process of the closing device which precedes the current closing process.

12. Method according to claim 11, **characterized in that** the moving direction of that actuating process which precedes the current closing process is determined by means of position counters.

13. Method according to claim 11, **characterized in that** the moving direction of that actuating process which precedes the current closing process is determined by evaluating the switch position of an actuating switch.

14. Method according to any one of claims 8 to 13, **characterized in that** the play value is determined by comparing the distance-covered-for-closing-dependent course of at least one motor parameter of the electric motor in a closing process that is preceded by a closing process and in a closing process that is preceded by an opening process.

15. Method according to claim 14, **characterized in that** the play value is determined by comparing the distances covered for closing until reaching characteristic points in the distance-covered-for-closing-dependent course of the at least one motor parameter of the electric motor.

16. Method according to any one of claims 8 to 15, **characterized in that** the plausibility of the determined play value is checked using the distance-covered-for-closing-dependent course of at least one motor parameter.

17. Method according to claim 16, **characterized in that** plausibility is checked using an extreme value of the at least one motor parameter.

18. Method according to any one of claims 1 to 17, **characterized in that** at least the motor current is used as a motor parameter.

## Revendications

1. Procédé de commande du processus de fermeture de dispositifs de fermeture, ayant au moins un partie déplacée par moteur électrique, dans lequel, pour garantir une protection anti-coincement dans la phase de démarrage du dispositif de fermeture immédiatement après l'activation du processus de fermeture avant le déplacement dans le sens de fermeture, un déplacement est d'abord effectué dans le sens d'ouverture avec une course d'ouverture définie, **caractérisé en ce que**
• la course d'ouverture est paramétrée de façon variable au moyen d'un processus d'adaptation ayant au moins une étape d'adaptation,
• et **en ce que** la course d'ouverture est modifiée au moins en fonction d'un processus d'actionnement antérieur du dispositif de fermeture.

2. Procédé selon la revendication 1, **caractérisé en ce que**, dans une première étape d'adaptation, en tant que course d'ouverture du processus de fermeture actuel, la course de fermeture parcourue lors du processus de fermeture précédent dans le sens de fermeture jusqu'à l'obtention du mode stationnaire du dispositif de fermeture est paramétrée.

3. Procédé selon la revendication 2, **caractérisé en ce que** la course de fermeture parcourue dans le sens de fermeture est déterminée au moyen d'une détection de position absolue ou incrémentielle.

4. Procédé selon une des revendications 1 à 3, **caractérisé en ce qu'**une valeur minimale pour la course d'ouverture est paramétrée en prenant en considération des règlements et/ou des prescriptions à respecter.

5. Procédé selon une des revendications 1 à 4, **caractérisé en ce que** la course d'ouverture reçoit une valeur d'offset additive en tant que supplément de sécurité.

6. Procédé selon une des revendications 1 à 5, **caractérisé en ce que**, dans une deuxième étape d'adaptation, la course d'ouverture est modifiée en fonction des propriétés de système du dispositif de fermeture.

7. Procédé selon la revendication 6, **caractérisé en ce que** la course d'ouverture est modifiée en fonction du comportement au démarrage du dispositif de fermeture en prenant en considération le jeu d'entraînement mécanique du dispositif de fermeture.

8. Procédé selon la revendication 7, **caractérisé en ce que** la course d'ouverture est modifiée en fonction de la valeur de jeu déterminée du jeu d'entraînement mécanique.

9. Procédé selon la revendication 8, **caractérisé en ce que** la valeur de jeu déterminée est mise au même niveau que la compensation du jeu d'entraînement mécanique apparaissant lors de la transition depuis le déplacement dans le sens d'ouverture vers le déplacement dans le sens de fermeture.

10. Procédé selon la revendication 9, **caractérisé en ce que** la course d'ouverture, lors d'un déplacement dans le sens d'ouverture survenant sans compensation du jeu d'entraînement mécanique, est réduite de la valeur de jeu déterminée.

11. Procédé selon la revendication 10, **caractérisé en ce que** la présence d'une compensation du jeu d'entraînement mécanique est déterminée à l'aide du sens de déplacement du processus d'actionnement du dispositif de fermeture qui précède le processus de fermeture actuel.

12. Procédé selon la revendication 11, **caractérisé en ce que** le sens de déplacement du processus d'actionnement précédant le processus de fermeture actuel est déterminé au moyen de compteurs de position.

13. Procédé selon la revendication 11, **caractérisé en ce que** le sens de déplacement du processus d'actionnement précédent le processus de fermeture actuel est déterminé par l'analyse de la position de commutateur d'un commutateur d'actionnement.

14. Procédé selon une des revendications 8 à 13, **caractérisé en ce que** la valeur de jeu est déterminée par la comparaison de la courbe, dépendant de la course de fermeture, d'au moins une grandeur caractéristique de moteur du moteur électrique lors d'un processus de fermeture précédé d'un processus de fermeture et lors d'un processus de fermeture précédé d'un processus d'ouverture.

15. Procédé selon la revendication 14, **caractérisé en ce que** la valeur de jeu est déterminée par la comparaison des courses de fermeture parcourues jusqu'à l'obtention de points caractéristiques dans la courbe, dépendant de la course de fermeture, de la grandeur caractéristique de moteur, au moins au nombre de un, du moteur du moteur électrique.

16. Procédé selon une des revendications 8 à 15, **caractérisé en ce que**, pour la valeur de jeu déterminé, il est effectué un contrôle de vraisemblance en utilisant la courbe, dépendant de la course de fermeture, d'au moins un grandeur caractéristique de moteur.

17. Procédé selon la revendication 16, **caractérisé en ce que** le contrôle de vraisemblance est effectué en utilisant une valeur extrême de la grandeur caractéristique de moteur au moins au nombre de un.

18. Procédé selon une des revendications 1 à 17, **caractérisé en ce que**, en tant que grandeur caractéristique de moteur, il est fait appel au moins au courant de moteur.
